# EUROPEAN PATENT SPECIFICATION

(11) **EP 3 590 679 B1**
(45) Date of publication and mention of the grant of the patent: **25.11.2020**
(21) Application number: 18761229.6
(22) Date of filing: 28.02.2018
(51) Int. Cl.: B29C 45/17, B29C 45/76

(54) **CORRECTING DEVICE, INJECTION MOLDING SYSTEM, AND CORRECTING METHOD**
KORREKTURVORRICHTUNG, SPRITZGIESSSYSTEM UND KORREKTURVERFAHREN
DISPOSITIF DE CORRECTION, SYSTÈME DE MOULAGE PAR INJECTION ET PROCÉDÉ DE CORRECTION

(30) Priority: 28.02.2017 JP 2017037770
(43) Date of publication of application: 08.01.2020
(73) Proprietor: Sumitomo Heavy Industries, Ltd., Tokyo 141-6025 (JP)
(72) Inventor: YAMAGUCHI, Takasue, Chiba-shi Chiba 263-0001 (JP); MORITA, Hiroshi, Chiba-shi Chiba 263-0001 (JP); ABE, Masahiro, Chiba-shi Chiba 263-0001 (JP)
(74) Representative: Louis Pöhlau Lohrentz
(86) International application number: PCT/JP2018/007661
(87) International publication number: WO 2018/159726

(56) References cited:
- EP-A1- 1 894 700
- EP-A2- 1 935 608
- WO-A1-2012/115105
- JP-A- S6 223 722
- JP-A- H11 323 699
- JP-A- 2005 288 892
- JP-A- 2014 061 677
- US-A1- 2003 189 267
- US-A1- 2005 218 545
- US-A1- 2006 197 248

## Description

### Technical Field

The present invention relates to a correcting device, an injection molding system, and a correcting method.

### Background Art

A management system for an injection molding machine described in PTL 1 performs a management process for the injection molding machine by connecting a host controller to a molding controller mounted on the injection molding machine. In a case where an abnormality occurs in any injection molding machine, information regarding the occurrence of the abnormality is transmitted to the host controller, and the intent of the information is displayed on the host controller. Therefore, the administrator can quickly check whether or not an abnormality has occurred and the specific type of abnormality by looking at the display on the display. PTL 2 discloses a correction processing for an injection molding machine which is accomplished at preset specific timing without interrupting the molding cycle. PTL 3 discloses a mold-clamping force detection method for a molding machine. PTL 4 discloses an apparatus for controlling pressure/speed pattern of an injection molding machine. PTL 5 discloses a mold clamping force correction method for a mold clamping apparatus. PTL 6 discloses an injection molding machine which performs a process for correcting the molding condition such as the injection/hold pressure switching position and the injection speed switching position.

### Citation List

### Patent Literature

[PTL 1] Japanese Unexamined Patent Publication No. 2009-119616
[PTL 2] United States Patent Publication No. 2006/197248
[PTL 3] European Patent Publication No. 1894700
[PTL 4] Japanese Unexamined Patent Publication No. S62-23722
[PTL 5] United States Patent Publication No. 2005/218545
[PTL 6] European Patent Publication No. 1935608

### Summary of Invention

### Technical Problem

There has been a demand for a device that can reduce a processing load of a molding machine controller provided in an injection molding machine.

The present invention has been made in view of the above problems, and a main object thereof is to provide a correcting device capable of reducing a processing load of a molding machine controller provided in an injection molding machine.

### Solution to Problem

In order to solve the above problems, according to an aspect of the present invention, there is provided a correcting device including: a timing signal reception unit which receives a timing signal that defines an operation timing of a drive unit of an injection molding machine controlled by a molding machine controller from the molding machine controller of the injection molding machine via a predetermined network; a timing setting unit which sets a detection timing at which a detection value is detected by a detector in the injection molding machine based on the timing signal received by the timing signal reception unit; a detection value acquisition unit which acquires the detection value detected by the detector at the detection timing set by the timing setting unit; and a correction value calculation unit which calculates a correction value of a set value of molding conditions of the injection molding machine based on a comparison between the detection value of the detector acquired by the detection value acquisition unit and a target value such that a deviation between the detection value and the target value becomes small.

### Advantageous Effects of Invention

According to the aspect of the present invention, the correcting device capable of reducing a processing load of the molding machine controller provided in the injection molding machine is provided.

### Brief Description of Drawings

Fig. 1 is a view showing a state when mold opening of an injection molding machine provided in an injection molding system according to an embodiment is completed.
Fig. 2 is a view showing a state at the time of mold clamping of the injection molding machine provided in the injection molding system according to the embodiment.
Fig. 3 is a functional block diagram showing components of a correcting device and a molding machine controller according to the embodiment.
Fig. 4 is a view showing a positional relationship between a plurality of tie bars provided in the injection molding machine according to the embodiment, and is a view of a stationary platen as viewed from a movable platen side.
Fig. 5 is a view showing a manipulation screen of the injection molding machine according to the embodiment.
Fig. 6 is a view showing a correction value calculation unit according to the embodiment.
Fig. 7 is a view showing a state at the time of mold clamping of a mold unit according to a modification example.
Fig. 8 is a view showing a relationship among a molding machine controller, a correcting device, and a host computer according to a modification example.

### Description of Embodiments

Hereinafter, embodiments of the present invention will be described with reference to the drawings. In each of the drawings, the same or corresponding components are denoted by the same or corresponding reference numerals, and description thereof is omitted.

### (Injection Molding System)

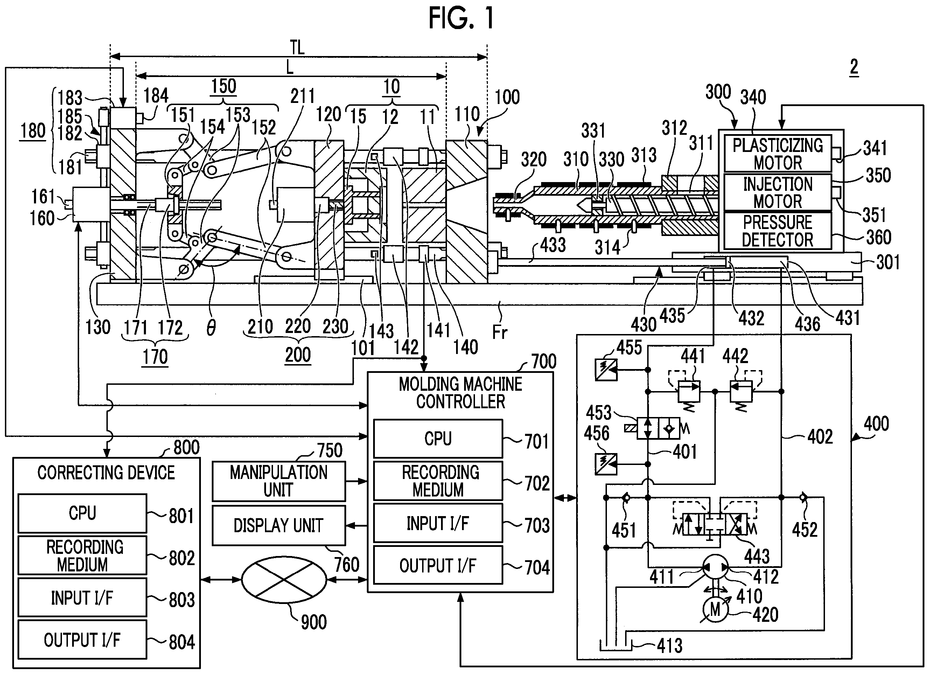

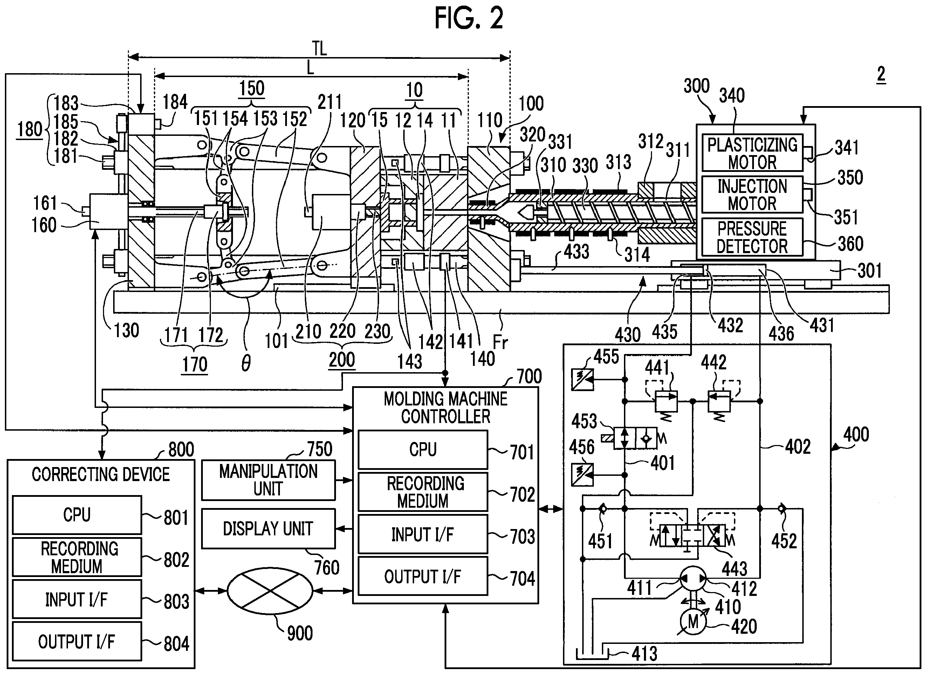

Fig. 1 is a view showing a state when mold opening of an injection molding machine provided in an injection molding system according to an embodiment is completed. Fig. 2 is a view showing a state at the time of mold clamping of the injection molding machine provided in the injection molding system according to the embodiment. In Figs. 1 and 2, an X direction, a Y direction, and a Z direction are directions perpendicular to each other. The X direction and the Y direction indicate a horizontal direction, and the Z direction indicates a vertical direction. In a case where a mold clamping unit 100 is a horizontal type mold clamping unit, the X direction is mold opening and closing directions, and the Y direction is a width direction of the injection molding machine.

The injection molding system includes an injection molding machine 2 and a correcting device 800. The injection molding machine 2 includes the mold clamping unit 100, an ejector unit 200, an injection unit 300, a movement unit 400, a molding machine controller 700, and a frame Fr. Hereinafter, each component of the injection molding machine 2 and the correcting device 800 will be described.

### (Mold Clamping Unit)

In descriptions of the mold clamping unit 100, a movement direction (for example, a right direction in Figs. 1 and 2) of a movable platen 120 when a mold is closed is defined as a front side, and a movement direction (a left direction in Figs. 1 and 2) of the movable platen 120 when the mold is opened is defined as a rear side.

The mold clamping unit 100 performs mold closing, mold clamping, and mold opening of a mold unit 10. For example, the mold clamping unit 100 is a horizontal type mold clamping unit, and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame Fr. A stationary mold 11 is attached to a surface of the stationary platen 110 facing the movable platen 120.

The movable platen 120 is movable in the mold opening and closing directions with respect to the frame Fr. A guide 101 which guides the movable platen 120 is placed on the frame Fr. A movable mold 12 is attached to a surface of the movable platen 120 facing the stationary platen 110.

The movable platen 120 moves forward or rearward with respect to the stationary platen 110, and thus, mold closing, mold clamping, and mold opening are performed. The mold unit 10 is constituted by the stationary mold 11 and the movable mold 12.

The toggle support 130 is connected to the stationary platen 110 with a gap therebetween, and is placed on the frame Fr to be movable in the mold opening and closing directions. In addition, the toggle support 130 may be movable along a guide which is placed on the frame Fr. The guide of the toggle support 130 may be also used as the guide 101 of the movable platen 120.

In addition, in the present embodiment, the stationary platen 110 is fixed to the frame Fr, and the toggle support 130 is movable in the mold opening and closing directions with respect to the frame Fr. However, the toggle support 130 may be fixed to the frame Fr, and the stationary platen 110 may be movable in the mold opening and closing directions with respect to the frame Fr.

The stationary platen 110 and the toggle support 130 are connected to each other with a gap L in the mold opening and closing directions by the tie bar 140. A plurality of (for example, four) tie bars 140 may be used. Each of the tie bars 140 is parallel to the mold opening and closing directions and extends according to a mold clamping force. A tie bar strain detector 141 which detects strain of the tie bar 140 may be provided in at least one tie bar 140. The tie bar strain detector 141 sends a signal indicating a detection result to the molding machine controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, an oil hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/stretchably connected to each other by pins or the like . The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing step, a mold clamping step, a mold opening step, or the like under a control of the molding machine controller 700.

In the mold closing step, the mold clamping motor 160 is driven to move the crosshead 151 forward to a mold closing completion position at a set speed. Accordingly, the movable platen 120 moves forward and the movable mold 12 comes into contact with the stationary mold 11. For example, a position or speed of the crosshead 151 is detected using a mold clamping motor encoder 161 or the like. The mold clamping motor encoder 161 detects the rotation of the mold clamping motor 160 and sends a signal indicating the detection result to the molding machine controller 700. In addition, a crosshead position detector which detects the position of the crosshead 151 and a crosshead speed detector which detects the speed of the crosshead 151 are not limited to the mold clamping motor encoder 161, and a general detector can be used. In addition, a movable platen position detector which detects the position of the movable platen 120 and a movable platen speed detector which detects the speed of the movable platen 120 are not limited to the mold clamping motor encoder 161, and a general detector can be used.

In the mold clamping step, the mold clamping motor 160 is further driven to further move the crosshead 151 forward from the mold closing completion position to a mold clamping position, and thus, a mold clamping force is generated. When the mold is clamped, a cavity space 14 (see Fig. 2) is formed between the movable mold 12 and the stationary mold 11, and the cavity space 14 is filled with a liquid molding material by the injection unit 300. A filled molding material is solidified, and thus, a molding product can be obtained. A plurality of cavity spaces 14 may be provided, and in this case, a plurality of molding products are obtained simultaneously.

In the mold opening step, the mold clamping motor 160 is driven to move the crosshead 151 rearward to a mold opening completion position at a set speed. Accordingly, the movable platen 120 moves rearward, and the movable mold 12 is separated from the stationary mold 11. Thereafter, the ejector unit 200 ejects the molding product from the movable mold 12.

Setting conditions in the mold closing step and the mold clamping step are collectively set as a series of setting conditions. For example, the speed or positions (including mold closing start position, speed switching position, mold closing completion position, and mold clamping position) and the mold clamping force of the crosshead 151 in the mold closing step and the mold clamping step are collectively set as a series of setting conditions. The mold closing start position, the speed switching position, the mold closing completion position, and the mold clamping position are arranged in this order from the rear side to the front side and indicate start points and end points of sections where the speed is set. The speed is set for each section. The speed switching position may be one or more. The speed switching position may not be set. Only one of the mold clamping position and the mold clamping force may be set.

Setting conditions are similarly set in the mold opening step. For example, the speed or positions (including mold opening start position, speed switching position, and mold opening completion position) of the crosshead 151 in the mold opening step are collectively set as a series of setting conditions. The mold opening start position, the speed switching position, and the mold opening completion position are arranged in this order from the front side to the rear side and indicate start points and end points of sections where the speed is set. The speed is set for each section. The speed switching position may be one or more. The speed switching position may not be set. The mold opening start position and the mold clamping position may be the same as each other. In addition, the mold opening completion position and the mold closing start position are the same as each other.

In addition, instead of the speed, the positions, or the like of the crosshead 151, a speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 10 is changed by a change of the mold unit 10, a temperature change of the mold unit 10, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a mold touch where the movable mold 12 comes into contact with the stationary mold 11 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is held to be rotatable by the toggle support 130, and a mold space adjustment motor 183 which rotates the screw nut 182 screwed to the screw shaft 181.

The screw shaft 181 and the screw nut 182 are provided for each of the tie bars 140. Rotation of the mold space adjustment motor 183 may be transmitted to a plurality of screw nuts 182 a rotation transmission portion 185. The plurality of screw nuts 182 can be synchronously rotated with each other. In addition, it is possible to rotate the plurality of screw nuts 182 individually by changing a transmission path of the rotation transmission portion 185.

For example, the rotation transmission portion 185 includes a gear or the like. In this case, a driven gear is formed on an outer periphery of each of the screw nuts 182, a drive gear is attached to an output shaft of the mold space adjustment motor 183, an intermediate gear which engages with a plurality of driven gears and drive gears is rotatably held by a center portion of the toggle support 130. In addition, the rotation transmission portion 185 may include a belt, a pulley, or the like instead of the gear.

An operation of the mold space adjustment mechanism 180 is controlled by the molding machine controller 700. The molding machine controller 700 drives the mold space adjustment motor 183 to rotate the screw nut 182, thereby adjusting the position of the toggle support 130 that rotatably holds the screw nut 182 with respect to the stationary platen 110 and adjusting the gap L between the stationary platen 110 and the toggle support 130.

In the present embodiment, the screw nut 182 is rotatably held by the toggle support 130, and the tie bar 140 on which the screw shaft 181 is formed is fixed to the stationary platen 110. However, the present invention is not limited to this.

For example, the screw nut 182 may be rotatably held by the stationary platen 110 and the tie bar 140 may be fixed to the toggle support 130. In this case, the gap L can be adjusted by rotating the screw nut 182.

In addition, the screw nut 182 may be fixed to the toggle support 130, and the tie bar 140 may be rotatably held by the stationary platen 110. In this case, the gap L can be adjusted by rotating the tie bar 140.

Furthermore, the screw nut 182 may be fixed to the stationary platen 110, and the tie bar 140 may be rotatably held by the toggle support 130. In this case, the gap L can be adjusted by rotating the tie bar 140.

The gap L is detected using a mold space adjustment motor encoder 184. The mold space adjustment motor encoder 184 detects a rotation amount or a rotation direction of the mold space adjustment motor 183 and sends a signal indicating a detection result to the molding machine controller 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

The mold space adjustment mechanism 180 adjusts the gap L by rotating one of the screw shaft 181 and the screw nut 182 which are screwed together. A plurality of mold space adjustment mechanisms 180 may be used, and a plurality of mold space adjustment motors 183 may be used.

The mold space adjustment mechanism 180 of the present embodiment has the screw shaft 181 formed on the tie bar 140 and the screw nut 182 screwed to the screw shaft 181 in order to adjust the gap L, but the present invention is not limited to this.

For example, the mold space adjustment mechanism 180 may include a tie bar temperature controller that adjusts the temperature of the tie bar 140. The tie bar temperature controller is attached to each of the tie bars 140 and adjusts the temperature of the plurality of tie bars 140 in cooperation with each other. As the temperature of the tie bar 140 increases, the tie bar 140 becomes longer due to thermal expansion, and the gap L increases. The temperatures of the plurality of tie bars 140 can be adjusted independently.

The tie bar temperature controller includes a heater such as a heater, and adjusts the temperature of the tie bar 140 by heating. The tie bar temperature controller may include a cooler such as a water cooling jacket, and may adjust the temperature of the tie bar 140 by cooling. The tie bar temperature controller may include both the heater and the cooler.

In addition, the mold clamping unit 100 of the present embodiment is a horizontal type mold clamping unit in which the mold opening and closing directions are the horizontal direction. However, the mold clamping unit 100 may be a vertical type mold clamping unit in which the mold opening and closing directions are an up-down direction. The vertical type mold clamping unit includes a lower platen, an upper platen, a toggle support, a tie bar, a toggle mechanism, a mold clamping motor, and the like. One of the lower platen and the upper platen is used as a stationary platen, and the other is used as a movable platen. A lower mold is attached to the lower platen, and an upper mold is attached to the upper platen. The lower mold and the upper mold constitute a mold unit. The lower mold may be attached to the lower platen via a rotary table. The toggle support is disposed below the lower platen and connected to the upper platen via the tie bar. The upper platen and the toggle support are connected to each other with a gap therebetween in the mold opening and closing directions by the tie bar. The toggle mechanism is disposed between the toggle support and the lower platen and lifts and lowers the movable platen. The mold clamping motor operates the toggle mechanism. In the case where the mold clamping unit is a vertical type mold clamping unit, the number of tie bars is usually three. The number of tie bars is not particularly limited.

In addition, the mold clamping unit 100 of the present embodiment has the mold clamping motor 160 as a drive source. However, the mold clamping unit 100 may have an oil hydraulic cylinder instead of the mold clamping motor 160. In addition, the mold clamping unit 100 may have a linear motor for opening and closing a mold and may have an electromagnet for clamping a mold.

### (Ejector Unit)

In descriptions of the ejector unit 200, as in the description of the mold clamping unit 100, a movement direction (for example, a right direction in Figs. 1 and 2) of the movable platen 120 when the mold is closed is defined as a front side, and a movement direction (a left direction in Figs. 1 and 2) of the movable platen 120 when the mold is opened is defined as a rear side.

The ejector unit 200 ejects the molding product from the mold unit 10. The ejector unit 200 includes an ejector motor 210, a motion conversion mechanism 220, an ejector rod 230, and the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 is movable forward or rearward in a through-hole of the movable platen 120. A front end portion of the ejector rod 230 is in contact with a movable member 15 which is disposed inside the movable mold 12 so as to be movable forward or rearward. The front end portion of the ejector rod 230 may be connected to or may not be connected to the movable member 15.

The ejector unit 200 performs an ejection step under the control of the molding machine controller 700.

In the ejection step, the ejector motor 210 is driven to move the ejector rod 230 forward from a standby position to an ejection position at a set speed, and thus, the movable member 15 moves forward and the molding product is ejected. Thereafter, the ejector motor 210 is driven to move the ejector rod 230 rearward at a set speed, and thus, the movable member 15 moves rearward to an original standby position. For example, a position or speed of the ejector rod 230 is detected using an ejector motor encoder 211. The ejector motor encoder 211 detects the rotation of the ejector motor 210 and sends a signal indicating the detection result to the molding machine controller 700. In addition, an ejector rod position detector which detects the position of the ejector rod 230 and an ejector rod speed detector which detects the speed of the ejector rod 230 are not limited to the ejector motor encoder 211, and a general detector can be used.

### (Injection Unit)

In description of the injection unit 300, unlike the description of the mold clamping unit 100 or the description of the ejector unit 200, a movement direction (for example, a left direction in Figs. 1 and 2) of a screw 330 during filling is defined as a front side, and a movement direction (a right direction in Figs. 1 and 2) of the screw 330 during plasticizing is defined as a rear side.

The injection unit 300 is installed on a slide base 301 that is movable forward or rearward with respect to the frame Fr, and is movable forward or rearward with respect to the mold unit 10. The injection unit 300 comes into contact with the mold unit 10, and the cavity space 14 inside the mold unit 10 is filled with the molding material. For example, the injection unit 300 includes a cylinder 310, a nozzle 320, the screw 330, a plasticizing motor 340, an injection motor 350, a pressure detector 360, or the like.

The cylinder 310 heats the molding material supplied to the inside from a supply port 311. The molding material includes, for example, a resin. For example, the molding material is formed in a pellet shape, and is supplied to the supply port 311 in a solid state. The supply port 311 is formed at a rear portion of the cylinder 310. A cooler 312 such as a water cooling cylinder is provided on an outer periphery of the rear portion of the cylinder 310. A heater 313 such as a band heater and a temperature detector 314 are provided on the outer periphery of the cylinder 310 on a side forward of the cooler 312.

The cylinder 310 is divided into a plurality of zones in an axial direction of the cylinder 310 (a left-right direction in Figs. 1 and 2). The heater 313 and the temperature detector 314 are provided in each zone. For each zone, the molding machine controller 700 controls the heater 313 such that a detection temperature of the temperature detector 314 becomes a set temperature.

The nozzle 320 is provided at a front end portion of the cylinder 310 and is pressed against the mold unit 10. The heater 313 and the temperature detector 314 are provided on an outer periphery of the nozzle 320. The molding machine controller 700 controls the heater 313 such that a detection temperature of the nozzle 320 becomes a set temperature.

The screw 330 is disposed in the cylinder 310 so as to be rotatable and movable forward or rearward. If the screw 330 is rotated, the molding material is sent forward along a spiral groove of the screw 330. The molding material is gradually melted by heat from the cylinder 310 while being sent forward. As the liquid molding material is sent forward of the screw 330 and accumulated in a front portion of the cylinder 310, the screw 330 is moved rearward. Thereafter, if the screw 330 is moved forward, the liquid molding material accumulated in front of the screw 330 is injected from the nozzle 320 and filled in the mold unit 10.

A backflow prevention ring 331 is attached to a front portion of the screw 330 as a backflow prevention valve that prevents a backflow of the molding material flowing from the front side to the rear side of the screw 330 when the screw 330 is pushed forward.

When the screw 330 is moved forward, the backflow prevention ring 331 is pushed rearward by a pressure of the molding material in front of the screw 330 and is moved rearward with respect to the screw 330 to a closing position (see Fig. 2) at which a flow path of the molding material is blocked. Accordingly, the molding material accumulated in front of the screw 330 is prevented from flowing rearward.

On the other hand, when the screw 330 is rotated, the backflow prevention ring 331 is pushed forward by the pressure of the molding material sent forward along the spiral groove of the screw 330 and is thus moved forward with respect to the screw 330 to an opening position (see Fig. 1) at which the flow path of the molding material is opened. Accordingly, the molding material is fed ahead of the screw 330.

The backflow prevention ring 331 may be either a co-rotating type ring that rotates together with the screw 330 or a non-co-rotating type ring that does not rotate together with the screw 330.

The injection unit 300 may have a drive source that causes the backflow prevention ring 331 to move forward or rearward between the opening position and the closing position with respect to the screw 330.

The plasticizing motor 340 rotates the screw 330. A drive source that rotates the screw 330 is not limited to the plasticizing motor 340, and may be an oil hydraulic pump, for example.

The injection motor 350 moves the screw 330 forward or rearward. A motion conversion mechanism that converts a rotary motion of the injection motor 350 into a linear motion of the screw 330 or the like is provided between the injection motor 350 and the screw 330. For example, the motion conversion mechanism includes a screw shaft and a screw nut which is screwed to the screw shaft. A ball or a roller may be provided between the screw shaft and the screw nut. A drive source that moves the screw 330 forward or rearward is not limited to the injection motor 350, and may be an oil hydraulic cylinder, for example.

The pressure detector 360 detects a pressure transmitted between the injection motor 350 and the screw 330. The pressure detector 360 is provided in a force transmission path between the injection motor 350 and the screw 330 and detects the pressure acting on the pressure detector 360.

The pressure detector 360 sends a signal indicating the detection result to the molding machine controller 700. The detection result of the pressure detector 360 is used to control and monitor a pressure received by the screw 330 from the molding material, a back pressure against the screw 330, a pressure acting on the molding material from the screw 330, or the like.

The injection unit 300 performs a plasticizing step, a filling step, a pressure holding step, or the like under a control of the molding machine controller 700.

In the plasticizing step, the plasticizing motor 340 is driven to rotate the screw 330 at a set rotational speed and send the molding material forward along the spiral groove of the screw 330. Accordingly, the molding material is gradually melted. As the liquid molding material is sent forward of the screw 330 and accumulated in a front portion of the cylinder 310, the screw 330 is moved rearward. For example, the rotational speed of the screw 330 is detected using a plasticizing motor encoder 341. The plasticizing motor encoder 341 detects the rotation of the plasticizing motor 340 and sends a signal indicating the detection result to the molding machine controller 700. A screw rotational speed detector which detects the rotational speed of the screw 330 is not limited to the plasticizing motor encoder 341, and a general detector can be used.

In the plasticizing step, a set back pressure may be applied to the screw 330 by driving the injection motor 350 in order to limit a rapid retreat of the screw 330. For example, the back pressure against the screw 330 is detected using the pressure detector 360. The pressure detector 360 sends a signal indicating the detection result to the molding machine controller 700. When the screw 330 is moved rearward to a plasticizing completion position and a predetermined amount of molding material is accumulated in front of the screw 330, the plasticizing step is completed.

In the filling step, the injection motor 350 is driven to move the screw 330 forward at a set speed and fill the cavity space 14 in the mold unit 10 with the liquid molding material accumulated in front of the screw 330. For example, a position or speed of the screw 330 is detected using an injection motor encoder 351 or the like. The injection motor encoder 351 detects the rotation of the injection motor 350 and sends a signal indicating the detection result to the molding machine controller 700. If the position of the screw 330 reaches a set position, switching from the filling step to the pressure holding step (so-called V/P switching) is performed. A position where the V/P switching is performed is also referred to as a V/P switching position. The set speed of the screw 330 may be changed according to the position, time, or the like of the screw 330.

In addition, after the position of the screw 330 reaches the set position in the filling step, the screw 330 may be temporarily stopped at the set position, and then the V/P switching may be performed. Immediately before the V/P switching, the screw 330 may be moved forward or rearward at a slow speed instead of stopping the screw 330. In addition, a screw position detector which detects the position of the screw 330 and a screw speed detector which detects the speed of the screw 330 are not limited to the injection motor encoder 351, and a general encoder can be used.

In the pressure holding step, the injection motor 350 is driven to push the screw 330 forward, maintain the pressure of the molding material at the front end portion of the screw 330 (hereinafter, also referred to as "holding pressure") at a set pressure, and push the molding material remaining in the cylinder 310 toward the mold unit 10. Insufficient molding material due to cooling shrinkage in the mold unit 10 can be replenished. For example, the holding pressure is detected using the pressure detector 360. The pressure detector 360 sends a signal indicating the detection result to the molding machine controller 700. A set value of the holding pressure may be changed according to an elapsed time from the start of the pressure holding step or the like.

In the pressure holding step, the molding material in the cavity space 14 in the mold unit 10 is gradually cooled, and when the pressure holding step is completed, an inlet of the cavity space 14 is closed with the solidified molding material. This state is called a gate seal, and the backflow of the molding material from the cavity space 14 is prevented. After the pressure holding step, a cooling step is started. In the cooling step, the molding material in the cavity space 14 is solidified. In order to shorten a molding cycle time, the plasticizing step may be performed during the cooling step.

In addition, the injection unit 300 of the present embodiment is an inline screw type injection unit, but may be a preplasticating type injection unit. A preplasticating type injection unit supplies a molding material melted in a plasticizing cylinder to an injection cylinder, and injects the molding material from the injection cylinder into a mold unit. In the plasticizing cylinder, a screw is disposed rotatably or rotatably and movable forward or rearward, and in the injection cylinder, a plunger is disposed to be movable forward or rearward.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is the up-down direction. A mold clamping unit combined with the vertical type injection unit 300 may be a vertical type mold clamping unit or a horizontal type mold clamping unit. Similarly, a mold clamping unit combined with the horizontal type injection unit 300 may be a horizontal type mold clamping unit or a vertical type mold clamping unit.

### (Movement Unit)

In description of the movement unit 400, similarly to the description of the injection unit 300, a movement direction (for example, a left direction in Figs. 1 and 2) of the screw 330 during filling is defined as a front side, and a movement direction (a right direction in Figs. 1 and 2) of the screw 330 during plasticizing is defined as a rear side.

The movement unit 400 moves the injection unit 300 forward or rearward with respect to the mold unit 10. In addition, the movement unit 400 presses the nozzle 320 against the mold unit 10 to generate a nozzle touch pressure. The movement unit 400 includes a fluid hydraulic pump 410, a motor 420 as a drive source, a fluid hydraulic cylinder 430 as a fluid hydraulic actuator, and the like.

The fluid hydraulic pump 410 has a first port 411 and a second port 412. The fluid hydraulic pump 410 is a bi-directionally rotatable pump, and by switching a rotation direction of the motor 420, a working fluid (for example, oil) is suctioned from one of the first port 411 and the second port 412 and discharged from the other and a fluid hydraulic pressure is generated. The fluid hydraulic pump 410 can also suction the working fluid from a tank 413 and discharge the working fluid from either the first port 411 or the second port 412.

The motor 420 operates the fluid hydraulic pump 410. The motor 420 drives the fluid hydraulic pump 410 with a rotational direction and rotational torque corresponding to a control signal from the molding machine controller 700. The motor 420 may be an electric motor or an electric servo motor.

The fluid hydraulic cylinder 430 includes a cylinder body 431, a piston 432, and a piston rod 433. The cylinder body 431 is fixed to the injection unit 300. The piston 432 divides an inside of the cylinder body 431 into a front chamber 435 as a first chamber and a rear chamber 436 as a second chamber. The piston rod 433 is fixed to the stationary platen 110. Since the piston rod 433 penetrates the front chamber 435, a cross-sectional area of the front chamber 435 is smaller than a cross-sectional area of the rear chamber 436.

The front chamber 435 of the fluid hydraulic cylinder 430 is connected to the first port 411 of the fluid hydraulic pump 410 via a first flow path 401. The working fluid discharged from the first port 411 is supplied to the front chamber 435 via the first flow path 401, whereby the injection unit 300 is pushed forward. The injection unit 300 is moved forward, and the nozzle 320 is pressed against the stationary mold 11. The front chamber 435 functions as a pressure chamber that generates the nozzle touch pressure of the nozzle 320 by the pressure of the working fluid supplied from the fluid hydraulic pump 410.

On the other hand, the rear chamber 436 of the fluid hydraulic cylinder 430 is connected to the second port 412 of the fluid hydraulic pump 410 via a second flow path 402. The working fluid discharged from the second port 412 is supplied to the rear chamber 436 of the fluid hydraulic cylinder 430 via the second flow path 402, whereby the injection unit 300 is pushed rearward. The injection unit 300 is moved rearward, and the nozzle 320 is separated from the stationary mold 11.

A first relief valve 441 opens in a case where a pressure in the first flow path 401 exceeds a set value to return the excess working fluid in the first flow path 401 to the tank 413 and keep the pressure in the first flow path 401 below set value.

A second relief valve 442 opens in a case where a pressure in the second flow path 402 exceeds a set value to return the excess working fluid in the second flow path 402 to the tank 413 and keep the pressure in the second flow path 402 below set value.

A flushing valve 443 is a valve that adjusts excess or deficiency of a circulating amount of the working fluid caused by the difference between the cross-sectional area of the front chamber 435 and the cross-sectional area of the rear chamber 436, and, for example, is configured as a 3-position 4-port spool valve as shown in Figs. 1 and 2.

A first check valve 451 opens in a case where the pressure in the first flow path 401 is lower than a pressure in the tank 413 to supply the working fluid from the tank 413 to the first flow path 401.

A second check valve 452 opens in a case where the pressure in the second flow path 402 is lower than the pressure in the tank 413 to supply the working fluid from the tank 413 to the second flow path 402.

An electromagnetic switching valve 453 is a control valve that controls a flow of the working fluid between the front chamber 435 of the fluid hydraulic cylinder 430 and the first port 411 of the fluid hydraulic pump 410. The electromagnetic switching valve 453 is provided in the middle of the first flow path 401, for example, and controls the flow of hydraulic fluid in the first flow path 401.

For example, the electromagnetic switching valve 453 is configured as a 2-position 2-port spool valve as shown in Figs. 1 and 2. In a case where the spool valve is in a first position (position on the left side in Figs. 1 and 2), a flow in both directions between the front chamber 435 and the first port 411 is allowed. On the other hand, in a case where the spool valve is in a second position (position on the right side in Figs. 1 and 2), a flow from the front chamber 435 to the first port 411 is restricted. In this case, the flow from the first port 411 to the front chamber 435 is not limited, but may also be limited.

A first pressure detector 455 detects a fluid hydraulic pressure in the front chamber 435. Since the nozzle touch pressure is generated by the fluid hydraulic pressure in the front chamber 435, the nozzle touch pressure can be detected using the first pressure detector 455. For example, the first pressure detector 455 is provided in the middle of the first flow path 401, and is provided at a position on the front chamber 435 side with respect to the electromagnetic switching valve 453. Regardless of the state of the electromagnetic switching valve 453, the nozzle touch pressure can be detected.

A second pressure detector 456 is provided in the middle of the first flow path 401 and is provided at a position on the first port 411 side with respect to the electromagnetic switching valve 453. The second pressure detector 456 detects the fluid hydraulic pressure between the electromagnetic switching valve 453 and the first port 411. In a case where the electromagnetic switching valve 453 is in a state of allowing the flow in both directions between the first port 411 and the front chamber 435, the fluid hydraulic pressure between the first port 411 and the electromagnetic switching valve 453 and the fluid hydraulic pressure between the electromagnetic switching valve 453 and the front chamber 435 are equal. Therefore, in this state, the nozzle touch pressure can be detected using the second pressure detector 456.

In the present embodiment, the nozzle touch pressure is detected using the pressure detector provided in the middle of the first flow path 401, but the nozzle touch pressure may be detected using a load cell provided in the nozzle 320, for example. That is, the pressure detector that detects the nozzle touch pressure may be provided in either the movement unit 400 or the injection unit 300.

In the present embodiment, the movement unit 400 includes the fluid hydraulic cylinder 430, but the present invention is not limited to this. For example, instead of the fluid hydraulic cylinder 430, an electric motor and a motion conversion mechanism that converts a rotary motion of the electric motor into a linear motion of the injection unit 300 may be used.

### (Molding Machine Controller)

For example, the molding machine controller 700 is constituted by a computer, and as shown in Figs. 1 and 2, includes a Central Processing Unit (CPU) 701, a recording medium 702 such as a memory, an input interface 703, and an output interface 704. The molding machine controller 700 performs various controls by causing the CPU 701 to execute a program stored in the recording medium 702. In addition, the molding machine controller 700 receives a signal from the outside through the input interface 703 and transmits a signal to the outside through the output interface 704.

The molding machine controller 700 repeatedly manufactures molding products by repeatedly performing a mold closing step, a mold clamping step, a mold opening step, and the like. Furthermore, the molding machine controller 700 performs a plasticizing step, a filling step, a pressure holding step, and the like during the mold clamping step. A series of operations for obtaining molding products, for example, operations from the start of the plasticizing step to the start of the next plasticizing step are also referred to as "shot" or "molding cycle". The time required for one shot is also referred to as "molding cycle time".

For example, one molding cycle includes the plasticizing step, the mold closing step, the mold clamping step, the filling step, the pressure holding step, the cooling step, the mold opening step, and the ejection step in this order. The order here is the order of the start of each step. The filling step, the pressure holding step, and the cooling step are performed in between the start of the mold clamping step and the end of the mold clamping step. The end of the mold clamping step coincides with the start of the mold opening step. In order to shorten the molding cycle time, a plurality of steps may be performed simultaneously. For example, the plasticizing step may be performed during the cooling step of the previous molding cycle, and in this case, the mold closing step may be performed at the beginning of the molding cycle. The filling step may be started during the mold closing step. The ejection step may be started during the mold opening step. In a case where an on-off valve that opens and closes the flow path of the nozzle 320 is provided, the mold opening step may be started during the plasticizing step. This is because even if the mold opening step is started during the plasticizing step, the molding material does not leak from the nozzle 320 if the on-off valve closes the flow path of the nozzle 320.

The molding machine controller 700 is connected to a manipulation unit 750 and a display unit 760. The manipulation unit 750 receives an input manipulation by a user and outputs a signal corresponding to the input manipulation to the molding machine controller 700. The display unit 760 displays a manipulation screen corresponding to the input manipulation in the manipulation unit 750 under the control of the molding machine controller 700. The manipulation screen is used for setting the injection molding machine or the like. A plurality of manipulation screens are prepared and are switched or overlapped to be displayed. The user performs setting of the injection molding machine (including inputting of set values) by manipulating the manipulation unit 750 while viewing the manipulation screen displayed on the display unit 760. For example, the manipulation unit 750 and the display unit 760 may be configured as a touch panel, and may be integrated. In addition, although the manipulation unit 750 and the display unit 760 of the present embodiment are integrated, the manipulation unit 750 and the display unit 760 may provide independently. A plurality of manipulation units 750 may be provided.

### (Correcting Device)

Similarly to the molding machine controller 700, the correcting device 800 includes a Central Processing Unit (CPU) 801, a recording medium 802 such as a memory, an input interface 803, and an output interface 804. The correcting device 800 performs various steps by causing the CPU 801 to execute a program stored in the recording medium 802. In addition, the correcting device 800 receives a signal from the outside through the input interface 803 and transmits a signal to the outside through the output interface 804. The correcting device 800 is connected to the molding machine controller 700 via a network 900 such as a Local Area Network (LAN) or an Internet line. The connection may be either a wired connection or a wireless connection.

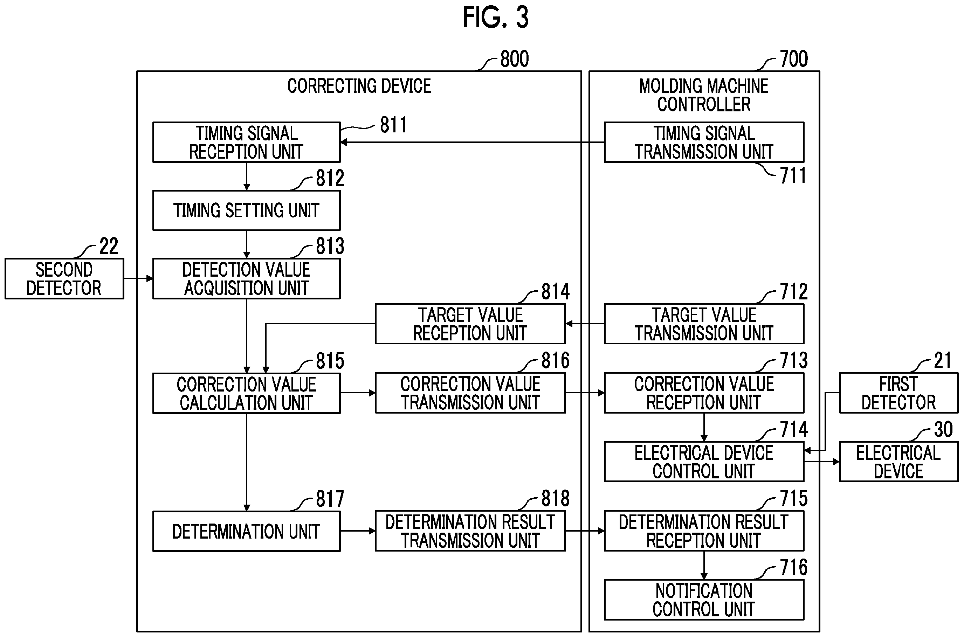

Fig. 3 is a functional block diagram showing components of the correcting device and the molding machine controller according to the embodiment. Each functional block shown in Fig. 3 is conceptual and does not necessarily need to be physically configured as illustrated. All or a part of each functional block can be configured to be functionally or physically distributed and integrated in arbitrary units. Each processing function performed in each functional block may be realized entirely or partially by a program executed by the CPU, or may be realized as hardware by wired logic.

As shown in Fig. 3, the molding machine controller 700 includes an electrical device control unit 714 that controls an electrical device 30 in the injection molding machine 2. The electrical device control unit 714 controls the electrical device 30 such that a detection value of a first detector 21 in the injection molding machine 2 becomes a set value. Examples of the electrical device 30 include the mold clamping motor 160, the mold space adjustment motor 183, the ejector motor 210, the heater 313, the plasticizing motor 340, the injection motor 350, the motor 420, a tie bar temperature controller 142, which will be described later, and the like. As the first detector 21, one corresponding to the electrical device 30 is selected. For example, as will be described later in detail, in a case where the electrical device 30 is the tie bar temperature controller 142, the first detector 21 is a tie bar temperature detector 143.

The correcting device 800 calculates a correction value of the set value to be compared with the detection value of the first detector 21 such that a deviation between a detection value of a second detector 22 in the injection molding machine 2 and a set value becomes small. The correcting device 800 transmits the calculated correction value to the molding machine controller 700. The molding machine controller 700 corrects the set value compared with the detection value of the first detector 21 by using the correction value calculated by the correcting device 800. The electrical device control unit 714 controls the electrical device 30 such that the detection value of the first detector 21 becomes the set value after correction. Accordingly, the deviation between the detection value detected by the second detector 22 and the set value can be reduced.

In addition, although the electrical device control unit 714 of the present embodiment is provided in the injection molding machine 2, the electrical device control unit 714 may be provided in the correcting device 800. The correcting device 800 may control the electrical device 30 such that the detection value of the first detector 21 becomes the set value. A plurality of electrical device control units 714 may be provided corresponding to the plurality of electrical devices 30. All the electrical device control units 714 may be provided in the inj ection molding machine 2, or all the electrical device control units 714 may be provided in the correcting device 800. Alternatively, some of the electrical device control units 714 may be provided in the injection molding machine 2, and the remaining electrical device control units 714 may be provided in the correcting device 800.

The molding machine controller 700 transmits a timing signal for defining an operation timing of a drive unit of the injection molding machine 2 controlled by the molding machine controller 700 to the correcting device 800 in order to adjust a detection timing at which the correcting device 800 detects the detection value by the second detector 22.

In addition, the molding machine controller 700 may control the operation timing of the drive unit of the injection molding machine 2 and may not control an operation of the drive unit of the injection molding machine 2. For example, the molding machine controller 700 may control a mold clamping timing, and the correcting device 800 may control the mold clamping motor 160.

As shown in Fig. 3, for example, the correcting device 800 includes a timing signal reception unit 811, a timing setting unit 812, a detection value acquisition unit 813, a target value reception unit 814, a correction value calculation unit 815, and a correction value transmission unit 816, a determination unit 817, and a determination result transmission unit 818.

The timing signal reception unit 811 receives the timing signal for defining the operation timing of the drive unit of the injection molding machine 2 controlled by the molding machine controller 700 from the molding machine controller 700 of the injection molding machine 2. The molding machine controller 700 performs a series of steps such as the mold closing step, the mold clamping step, and the mold opening step. Furthermore, the molding machine controller 700 performs the filling step, the pressure holding step, the plasticizing step, and the like during the mold clamping step. Examples of the drive unit controlled by the molding machine controller 700 include the mold clamping motor 160, the plasticizing motor 340, and the injection motor 350. The drive unit controlled by the molding machine controller 700 may be an electromagnet, a linear motor, an oil hydraulic cylinder, an oil hydraulic pump, or the like. The molding machine controller 700 includes a timing signal transmission unit 711 that transmits a timing signal to the correcting device 800 in order to notify the correcting device 800 of the operation timing of the drive unit controlled by the molding machine controller 700. The molding machine controller 700 controls the drive unit of the injection molding machine 2 at the operation timing defined by the timing signal transmitted to the correcting device 800.

The timing setting unit 812 sets a detection timing at which a detection value of a second physical quantity is detected by the second detector 22 in the injection molding machine 2 based on the timing signal received by the timing signal reception unit 811. The detection timing is set according to the type of the second physical quantity. For example, in a case where the second physical quantity is an axial force balance or a mold clamping force, the detection timing set by the timing setting unit 812 is during the mold clamping step.

For example, the timing setting unit 812 sets the detection timing to when the timing signal reception unit 811 receives the timing signal or when the time elapsed from the reception reaches a preset delay time. The delay time is set according to the type of operation timing defined by the timing signal and the type of second physical quantity.

The detection value acquisition unit 813 acquires the detection value of the second physical quantity detected by the second detector 22 at the detection timing set by the timing setting unit 812. For example, the second physical quantity is a variable used for quality control of molding products. Specifically, examples of the second physical quantity include the axial force balance of the plurality of tie bars 140, the mold clamping force of the mold unit 10, the distance between the molds, the mold internal pressure, the mold temperature, and the mass, shape, and dimensions of the molding products.

The second detector 22 detects the second physical quantity at the detection timing set by the timing setting unit 812, for example, the time when the timing signal is received by the timing signal reception unit 811 or when the time elapsed from the reception reaches the preset delay time. The timing at which the second physical quantity detected is set according to the type of the second physical quantity. For example, the timing at which the axial force balance and the mold clamping force are detected is set during the mold clamping step.

The timing at which the detection value of the second detector 22 is transmitted from the second detector 22 to the detection value acquisition unit 813 is not particularly limited. The second detector 22 may belong to the injection molding machine 2 or may belong to the correcting device 800. As the second detector 22, for example, the tie bar strain detector 141 which detects strain of the tie bar 140, a temperature detector which detects the temperature of the mold unit 10, a vibration detector which detects vibration of the mold unit 10, and an imaging unit which takes an image of a molding product, or a mass detector which detects a mass of the molding product is used. The image of the molding product taken by the imaging unit is used to detect dimensions, shape, color, and the like of the molding product.

The target value reception unit 814 receives a target value to be compared with the detection value of the second detector 22 from the molding machine controller 700 of the injection molding machine 2. For example, the target value is input by the user of the injection molding machine 2 and stored in advance in the recording medium 702 of the molding machine controller 700 for use. The molding machine controller 700 includes a target value transmission unit 712 that transmits the target value to the correcting device 800. Although a timing at which target value is transmitted is not particularly limited, for example, the timing may be synchronized with the timing at which the timing signal is transmitted. The target value may be stored in advance in the correcting device 800.

The correction value calculation unit 815 calculates a correction value of a set value of the setting conditions of the injection molding machine 2 based on the comparison between the detection value of the second detector 22 acquired by the detection value acquisition unit 813 and the target value in order to change the detection value detected by the second detector 22 after the comparison. The set value is a set value of a first physical quantity different from the second physical quantity. The first physical quantity is a variable that indirectly affects the quality of the molding product by affecting the second physical quantity. The second physical quantity is a controlled variable, and the first physical quantity is a manipulated variable. The controlled variable is a variable controlled so as to become a target value. The manipulated variable is a variable that is changed such that a detection value of the controlled variable becomes the target value. Specific examples of the first physical quantity include a set temperature of the tie bar 140, a set position of the toggle support 130, and a set position of the crosshead 151.

The correction value of the set value may be a set value after correction or a difference between the set value after correction and the set value before correction (for example, a value obtained by subtracting the set value before correction from the set value after correction) . In the latter case, a value obtained by adding the correction value to the set value before correction is used as the set value after correction. The correction value of the set value may be a value obtained by subtracting the set value after correction from the set value before correction. In this case, a value obtained by subtracting the correction value from the set value before correction is used as the set value after correction.

The correction value of the set value is calculated such that a deviation between the detection value detected by the second detector 22 and the target value after the comparison between the detection value of the second detector 22 acquired by the detection value acquisition unit 813 and the target value is reduced (preferably becomes zero). For calculation of the correction value, Proportional Integral (PI) calculation, Proportional Integral Derivative (PID) calculation, correlation analysis, or the like may be used. Here, after the comparison may be the next shot or the current shot.

The correction value transmission unit 816 transmits the correction value calculated by the correction value calculation unit 815 to the molding machine controller 700 of the injection molding machine 2. The molding machine controller 700 includes a correction value reception unit 713 which receives the correction value transmitted from the correcting device 800, and an electrical device control unit 714 which controls the electrical device 30 in the injection molding machine 2 by using the correction value received by the correction value reception unit 713. The electrical device 30 is for controlling the first physical quantity. Examples of the electrical device 30 include a tie bar temperature controller 142, the mold space adjustment motor 183, and the mold clamping motor 160. The set value of the first physical quantity is corrected by using the correction value received by the correction value reception unit 713. The electrical device control unit 714 controls the electrical device 30 according to the set value after correction. Accordingly, the detection value of the second detector 22 can be made to coincide with the target value, and the quality of the molding product can be improved.

According to the present embodiment, the correcting device 800 that is an external device of the injection molding machine 2 calculates the correction value. Therefore, a processing load of the CPU 701 of the molding machine controller 700 can be reduced. In a case where a processing speed of the CPU 701 of the molding machine controller 700 is slower than a processing speed of the CPU 801 of the correcting device 800, a processing speed of the control of the injection molding machine 2 can be improved by reducing the processing load of the CPU 701 of the molding machine controller 700. Therefore, the molding machine controller 700 on which the CPU 701 of an old generation is mounted can be extended in life by the correcting device 800 on which the CPU 801 of a new generation CPU is mounted. Alternatively, the molding machine controller 700 on which the CPU 701 after aging is mounted can be extended in life by the correcting device 800 on which the CPU 801 before aging is mounted. In the latter case, the CPU 701 of the molding machine controller 700 and the CPU 801 of the correcting device 800 may be of the same generation. Moreover, according to the present embodiment, since a calculation result is transmitted after calculating the correction value, a communication amount can be suppressed. Furthermore, according to the present embodiment, the quality of the molding product can be improved without significantly modifying the hardware and software of the molding machine controller 700.

In addition, although the electrical device control unit 714 of the present embodiment is provided in the molding machine controller 700, the electrical device control unit 714 may be provided in the correcting device 800. In this case, the correction value transmission unit 816 and the correction value reception unit 713 are not necessary. In this case, since the correcting device 800 controls the electrical device 30 using the calculated correction value, the processing load of the molding machine controller 700 can be further reduced, and the communication amount can be suppressed.

The determination unit 817 determines whether or not the correction value calculated by the correction value calculation unit 815 is within an allowable range. This determination is used for determining presence or absence of an abnormality regarding the injection molding machine 2 (including an abnormality of the mold unit 10). For example, it is determined that there is no abnormality in a case where the correction value is within the allowable range, and it is determined that there is an abnormality in a case where the correction value is outside the allowable range. The allowable range is appropriately set according to the type of the first physical quantity. The allowable range is defined by a preset threshold. The threshold that defines the allowable range may be either an upper limit value or a lower limit value, or both. The determination of the presence or absence of an abnormality regarding the injection molding machine 2 may be based on a determination result of whether or not the correction value is within the allowable range and another determination result.

By determining the presence or absence of an abnormality based on the correction value, an abnormality that cannot be known from the individual detection values can be detected. For example, in a case where the correction value of a filling pressure or a holding pressure is outside the allowable range although an in-mold pressure is normal, it can be determined that the screw 330 is worn. Furthermore, in a case where the correction value of the position of the toggle support or the position of the crosshead is outside the allowable range although a mass of the molding product is normal, it can be determined that the mold unit 10 is damaged.

The determination result transmission unit 818 transmits the determination result of the determination unit 817 to the molding machine controller 700 of the injection molding machine 2. The molding machine controller 700 includes a determination result reception unit 715 that receives the determination result transmitted from the correcting device 800, and a notification control unit 716 that performs a notification control of the determination result received by the determination result reception unit 715. The determination result of the determination unit 817 is notified by an image or sound. As the notification unit, for example, a display unit 760, a warning light, or a buzzer is used. The notification of the determination result of the determination unit 817 may be performed only in a case where there is an abnormality, or may be performed in both the case where there is an abnormality and a case where there is no abnormality.

According to the present embodiment, the correcting device 800 that is the external device of the injection molding machine 2 determines whether or not the correction value is within the allowable range. Therefore, the processing load of the molding machine controller 700 can be reduced. In addition, since the determination result is transmitted after performing the determination, the communication amount can be suppressed. Furthermore, the presence or absence of an abnormality can be determined without significantly modifying the hardware and software of the molding machine controller 700.

The determination unit 817 of the present embodiment is provided in the correcting device 800, but the determination unit 817 may be provided in the molding machine controller 700. In this case, the molding machine controller 700 determines whether or not the correction value received by the correction value reception unit 713 is within the allowable range.

Furthermore, the notification control unit 716 of the present embodiment is provided in the molding machine controller 700, but the notification control unit may be provided in the correcting device 800. In this case, the determination result transmission unit 818 and the determination result reception unit 715 are not necessary. In this case, since the correcting device 800 performs a notification control of the determination result, the processing load of the molding machine controller 700 can be further reduced, and the communication amount can be suppressed.

Hereinafter, a specific example of processing of the correcting device 800 will be described.

### (Correction of Set Temperature of Tie Bar)

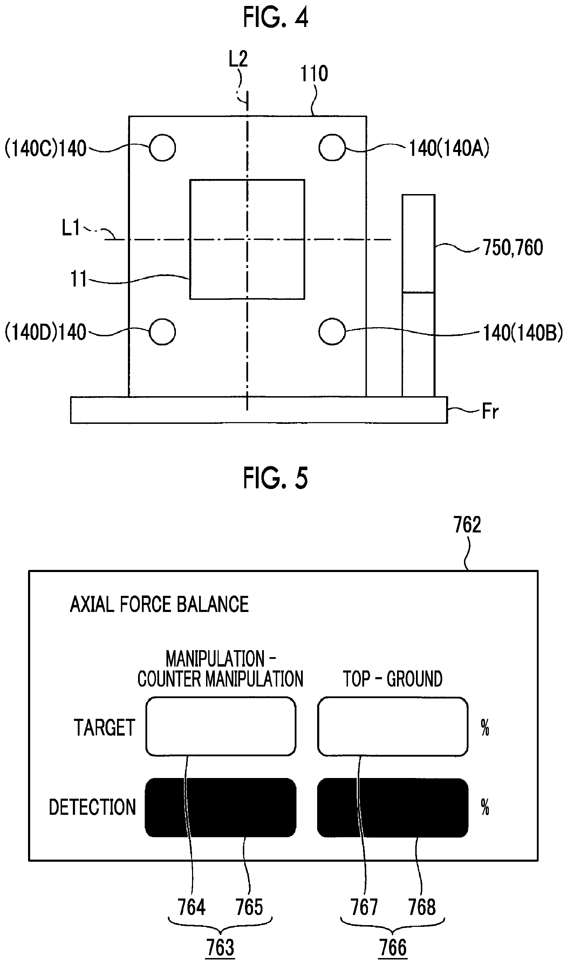

Fig. 4 is a view showing a positional relationship between a plurality of tie bars provided in the injection molding machine according to the embodiment, and is a view of the stationary platen as viewed from the movable platen side. For example, the injection molding machine has four tie bars 140. The four tie bars 140 are arranged vertically symmetrically about a horizontal line L1 and arranged horizontally symmetrically about a vertical line L2 as viewed in the mold opening and closing directions. An upper side from the horizontal line L1 is called a top side, and a lower side from the horizontal line L1 is called a ground side. The manipulation unit 750 side from the vertical line L2 is referred to as a manipulation side, and a side opposite to the manipulation unit 750 from the vertical line L2 is referred to as a counter manipulation side.

The mold clamping force is applied to the four tie bars 140 in a distributed manner, and each of the tie bars 140 extends . The force that resists the extension of each of the tie bars 140 is called an axial force. In a case where there is a difference in effective length TL between the four tie bars 140, there is a difference in axial force between the tie bar 140 with a short effective length TL and the tie bar 140 with a long effective length TL. Here, the effective length TL of each of the tie bars 140 is a length between a portion fastened to the toggle support 130 and a portion fastened to the stationary platen 110 in the corresponding tie bar 140 and is measured along each of the tie bars 140. The effective length TL of each of the tie bars 140 is measured, for example, in a state where no mold clamping force is exerted.

In a case where the mold clamping unit is a vertical type mold clamping unit, the effective length TL of each of the tie bars 140 is a length between a portion fastened to the toggle support and a portion fastened to the upper platen in the corresponding tie bar 140 and is measured along each of the tie bars 140.

For example, the effective length TL of the tie bar 140 is set such that a surface pressure between the stationary mold 11 and the movable mold 12 becomes a target distribution during the mold clamping. The target distribution may be either a uniform distribution or a non-uniform distribution, and is set according to situations. Molding defects can be reduced. The effective lengths TL of the plurality of tie bars 140 may be the same or different from each other.

The effective length TL of the tie bar 140 changes according to the temperature of the tie bar 140. The higher the temperature of the tie bar 140, the longer the effective length TL of the tie bar 140 becomes. Therefore, by adjusting the temperature of the tie bar 140, the effective length TL of the tie bar 140 can be adjusted, and the axial force balance can be adjusted. Here, the axial force balance means a degree of variation in the axial force, and may be expressed by, for example, a difference in axial force. The difference in axial force may be expressed as a ratio (%) to an average axial force. For example, the axial force balance is set such that the surface pressure between the stationary mold 11 and the movable mold 12 becomes a target distribution during the mold clamping. The target distribution may be either a uniform distribution or a non-uniform distribution, and is set according to situations. Molding defects can be reduced.

In order to adjust the effective length TL of the tie bar 140, as shown in Figs. 1 and 2, the tie bar temperature controller 142 and the tie bar temperature detector 143 are attached to each of the tie bars 140. The tie bar temperature controller 142 includes a heater such as a heater and adjusts the temperature of the tie bar 140 by heating. The tie bar temperature controller 142 may include a cooler such as a water cooling jacket, and may adjust the temperature of the tie bar 140 by cooling. The tie bar temperature controller 142 may include both the heater and the cooler. The tie bar temperature controller 142 is controlled such that the detected temperature of the tie bar 140 detected by the tie bar temperature detector 143 becomes a set temperature.

For example, the correcting device 800 is used to adjust the effective length TL of the tie bar 140, and is used to adjust the axial force balance. The correcting device 800 receives a timing signal for defining an operation timing of the mold clamping unit 100 and a target value of the axial force balance from the molding machine controller 700 of the injection molding machine 2. For example, the target value of the axial force balance is input by manipulating the manipulation screen.

Fig. 5 is a view showing the manipulation screen of the injection molding machine according to the embodiment. The manipulation screen includes an axial force balance display portion 762. The axial force balance display portion 762 displays the balance of axial force. Therefore, the manipulation screen can be easily adjusted such that the surface pressure distribution between the stationary mold 11 and the movable mold 12 can be easily perceived compared with a case where each axial force is displayed individually. Here, the balance of the axial force means a degree of variation in the axial force, and may be expressed by, for example, a difference in axial force. The difference in axial force may be expressed as a ratio (%) to an average axial force.

The manipulation screen may further include an axial force display portion that individually displays each axial force.

The axial force balance display portion 762 includes a horizontal axial force balance display portion 763 and a vertical axial force balance display portion 766. The horizontal axial force balance display portion 763 and the vertical axial force balance display portion 766 may be displayed simultaneously on the manipulation screen. A balance in two directions can be visually recognized.

The horizontal axial force balance display portion 763 displays the balance of axial force in the horizontal direction (hereinafter, also referred to as horizontal axial force balance). For example, the horizontal axial force balance is expressed by a difference between a sum of axial forces of two tie bars 140A and 140B on the manipulation side and a sum of axial forces of two tie bars 140C and 140D on the counter manipulation side. This difference may be expressed as a ratio (%) to an average value of all axial forces. In a case of the ratio, there is no fluctuation due to a magnification of the mold clamping force.

When a numerical value of the horizontal axial force balance is referred to as Nh (%), the sum of the axial forces on the manipulation side is 100 + Nh/2 (%), and the sum of the axial forces on the counter manipulation side is 100 - Nh/2 (%). The numerical value Nh of the horizontal axial force balance being positive means that the sum of the axial forces on the manipulation side is larger than the sum of the axial forces on the counter manipulation side. On the other hand, the numerical value Nh of the horizontal axial force balance being negative means that the sum of the axial forces on the manipulation side is smaller than the sum of the axial forces on the counter manipulation side.

In addition, the relationship between whether the numerical value of the horizontal axial force balance is positive or negative and the magnitude of the axial force on the manipulation side and the axial force on the counter manipulation side may be reversed. Instead of the sum of the axial forces of the two tie bars 140A and 140B on the manipulation side, an average value of the axial forces of the two tie bars 140A and 140B on the manipulation side may be used, and instead of a sum of strains of the two tie bars 140C and 140D on the counter manipulation side, an average value of the strains of the two tie bars 140C and 140D on the counter manipulation side may be used.

The horizontal axial force balance display portion 763 includes a target value display portion 764 and a detection value display portion 765. The target value display portion 764 displays a target value of the horizontal axial force balance. The detection value display portion 765 displays a detection value of the horizontal axial force balance. The target value display portion 764 and the detection value display portion 765 may be displayed simultaneously on the manipulation screen. A deviation between the target value and the detection value can be visually recognized.

The user inputs the target value of the horizontal axial force balance to the target value display portion 764 by manipulating the manipulation unit 750 while viewing the manipulation screen.

The vertical axial force balance display portion 766 displays the balance of axial force in the vertical direction (hereinafter, also referred to as vertical axial force balance) . For example, the vertical axial force balance is expressed by a difference between a sum of axial forces of the two tie bars 140A and 140C on the top side and a sum of axial forces of the two tie bars 140B and 140D on the ground side. This difference may be expressed as a ratio (%) to an average value of all axial forces. In a case of the ratio, there is no fluctuation due to a magnification of the mold clamping force.

When a numerical value of the vertical axial force balance is referred to as Nv (%), the sum of the axial forces on the top side is 100 + Nv/2 (%), and the sum of the axial forces on the ground side is 100 - Nv/2 (%). The numerical value Nv of the vertical axial force balance being positive means that the sum of the axial forces on the top side is larger than the sum of the axial forces on the ground side. On the other hand, the numerical value Nv of the vertical axial force balance being negative means that the sum of the axial forces on the top side is smaller than the sum of the axial forces on the ground side.

In addition, the relationship between whether the numerical value of the vertical axial force balance is positive or negative and the magnitude of the axial force on the top side and the axial force on the ground side may be reversed. Instead of the sum of the axial forces of the two tie bars 140A and 140C on the top side, an average value of the axial forces of the two tie bars 140A and 140C on the top side may be used, and instead of a sum of the axial forces of the two tie bars 140B and 140D on the ground side, an average value of the axial forces of the two tie bars 140B and 140D on the ground side may be used.

The vertical axial force balance display portion 766 includes a target value display portion 767 and a detection value display portion 768. The target value display portion 767 displays a target value of the vertical axial force balance. The detection value display portion 768 displays a detection value of the vertical axial force balance. The target value display portion 767 and the detection value display portion 768 may be displayed simultaneously on the manipulation screen. A deviation between the target value and the detection value can be visually recognized.

The user inputs the target value of the vertical axial force balance to the target value display portion 767 by manipulating the manipulation unit 750 while viewing the manipulation screen.

The detection value acquisition unit 813 acquires the detection value of the axial force balance detected at the detection timing set by the timing setting unit 812. Since the axial force cannot be detected at a timing at which the mold opening step is performed or a timing at which the mold closing step is performed, the axial force is detected at a timing at which the mold clamping step is performed. For example, the axial force is detected by a tie bar strain detector 141. The tie bar strain detector 141 is attached to each of the tie bars 140.

The correction value calculation unit 815 calculates a correction value of the set temperature of each of the tie bars 140 based on the comparison between the detection value of the axial force balance acquired by the detection value acquisition unit 813 and the target value in order to change the detection value of the axial force balance after the comparison. The correction value is calculated such that a deviation between the detection value of the axial force balance and the target value after the comparison is reduced (preferably becomes zero) .

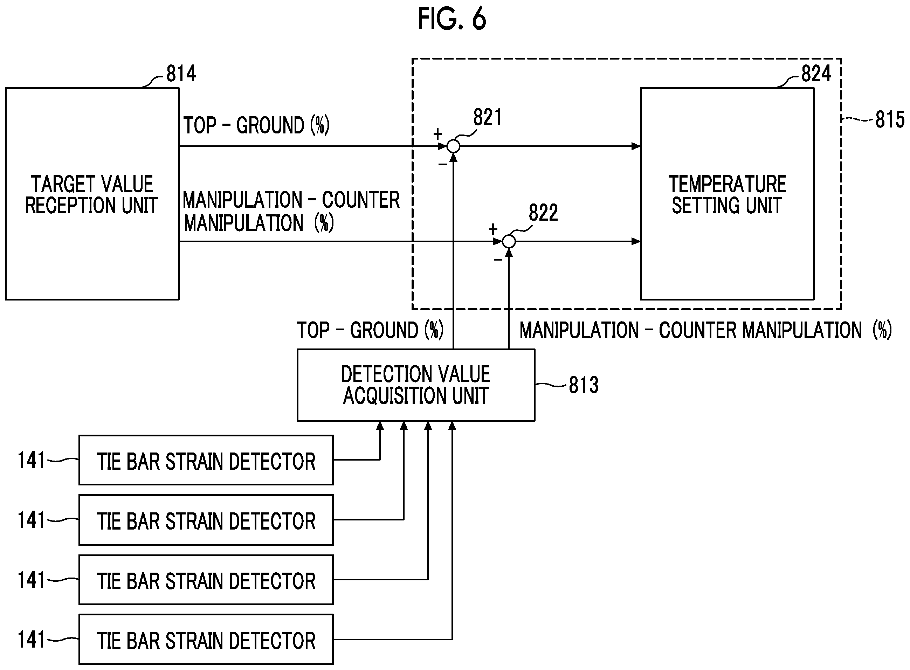

Fig. 6 is a view showing the target value reception unit, the detection value acquisition unit, and the correction value calculation unit according to the embodiment.

The target value reception unit 814 receives the target values of the axial force balances input to the target value display portions 764 and 767 from the molding machine controller 700 of the injection molding machine 2. For example, the target value reception unit 814 receives the target value for the horizontal axial force balance and the target value for the vertical axial force balance. The balance of the axial force may be expressed by the degree of variation in axial force, for example, the difference in axial force. The difference in axial force may be expressed as a ratio (%) to an average axial force. In a case of the ratio, there is no fluctuation due to a magnification of the mold clamping force.

The detection value acquisition unit 813 acquires the detection value of the axial force balance detected at the detection timing set by the timing setting unit 812. For example, the target value reception unit 814 acquires the detection value of the horizontal axial force balance and the detection value of the vertical axial force balance. For example, the axial force is detected by a tie bar strain detector 141. The tie bar strain detector 141 is attached to each of the tie bars 140.

The correction value calculation unit 815 includes a subtractor 821 which calculates a difference between the target value of the vertical axial force balance and the detection value of the vertical axial force balance, a subtractor 822 which calculates a difference between the target value of the horizontal axial force balance and the detection value of the horizontal axial force balance, and a temperature setting unit 824 which calculates the set temperature of each of the tie bars 140 based on calculation results of the subtractors 821 and 822.

The temperature setting unit 824 calculates the set temperature of each of the tie bars 140 based on the difference between the target value of the axial force balance and the detection value of the axial force balance. Compared with a case where this calculation is performed based on each axial force instead of the axial force balance, an influence of a change in the set temperature of one tie bar 140 on the axial force of another tie bar 140 is easier to handle, and calculation of the set temperature of each of the tie bars 140 is easy.

For example, the temperature setting unit 824 may set TO (°C), Th (°C), and Tv (°C) by referring
the temperature of the tie bar 140A on the manipulation side and the top side to as TO + Th + Tv,
the temperature of the tie bar 140B on the manipulation side and the ground side to as TO + Th - Tv,
the temperature of the tie bar 140C on the counter manipulation side and the top side to as TO - Th + Tv, and
the temperature of the tie bar 140D on the counter manipulation side and the ground side to as TO - Th - Tv.

TO represents an average value (°C) of the temperatures of all the tie bars 140, Th represents a balance (difference) in the temperatures in the horizontal direction, and Tv represents a balance (difference) in the temperatures in the vertical direction.

The temperature setting unit 824 may calculate the set temperature of each of the tie bars 140 based on the influence of the change in the set temperature of the tie bar 140 on the balance of the axial force. The influence of the change in the set temperature of one tie bar 140 on the axial force of another tie bar 140 can be considered. The above-mentioned influence is obtained in advance by experiments and simulations, and one stored in the recording medium 802 is read and used. The influence described above may be stored in the recording medium 802 in the form of a formula or a table.

The temperature setting unit 824 calculates the set temperature after change as the correction value of the set temperature of each of the tie bars 140. The temperature setting unit 824 may calculate a difference between the set temperature after the change and the set temperature before the change as the correction value of the set temperature of each of the tie bars 140.

The target value of the axial force balance may have an allowable range. The allowable range is defined by a preset threshold. The threshold that defines the allowable range may be either an upper limit value or a lower limit value, or both. Until the detection value of the axial force balance falls within the allowable range, the calculation of the correction value by the correction value calculation unit 815 and the acquisition of the axial force balance by the detection value acquisition unit 813 may be repeated. PI calculation or the like is used to calculate the correction value of the set temperature of the tie bar 140.

The correction value transmission unit 816 transmits the correction value of the set temperature of the tie bar 140 calculated by the correction value calculation unit 815 to the molding machine controller 700 of the injection molding machine 2. The molding machine controller 700 controls the temperature of the tie bar 140 by controlling the tie bar temperature controller 142 by using the correction value calculated by the correction value calculation unit 815. Accordingly, a desired axial force balance is obtained. The temperature control of the tie bar 140 may be performed by the correcting device 800.

The determination unit 817 determines whether or not the correction value of the set temperature of the tie bar 140 calculated by the correction value calculation unit 815 is within the allowable range. This determination is used for determining the presence or absence of an abnormality regarding the injection molding machine 2 or the like. For example, it is determined that there is no abnormality in a case where the correction value is within the allowable range, and it is determined that there is an abnormality in a case where the correction value is outside the allowable range. For example, the allowable range is set according to an assumed fluctuation range of the surface pressure distribution between the stationary mold 11 and the movable mold 12. The allowable range is defined by a preset threshold. The threshold that defines the allowable range may be either an upper limit value or a lower limit value, or both. The determination of the presence or absence of an abnormality regarding the injection molding machine 2 may be based on a determination result of whether or not the correction value is within the allowable range and another determination result.

The determination result transmission unit 818 transmits the determination result of the determination unit 817 to the molding machine controller 700 of the injection molding machine 2. The molding machine controller 700 performs a notification control of the determination result of the determination unit 817. The notification control of the determination result may be performed by the correcting device 800.

In the present embodiment, in order to adjust the effective length TL of the tie bar 140, the temperature of the tie bar 140 is adjusted by the tie bar temperature controller 142. However, a rotation amount of the screw nut 182 may be adjusted by the mold space adjustment mechanism 180. In this case, the mold space adjustment mechanism 180 rotates the plurality of screw nuts 182 individually.

### (Correction of Position of Toggle Support)

For example, in the mold space adjustment, the gap L between the stationary platen 110 and the toggle support 130 is adjusted such that the link angle θ of the toggle mechanism 150 at the time of a mold touch where the movable mold 12 comes into contact with the stationary mold 11 becomes a set angle.

In the mold clamping step, the mold clamping motor 160 is driven to further move the crosshead 151 forward from the mold closing completion position to the mold clamping position with respect to the toggle support 130, and thus, a mold clamping force is generated. A mold clamping force corresponding to the toggle magnification is obtained.

However, if the temperature of the tie bar 140 changes due to a change in room temperature or the like after the mold space adjustment, the effective length TL of the tie bar 140 changes, so that the link angle θ of the toggle mechanism 150 may deviate from a predetermined angle at the time of the mold touch and the mold clamping force may fluctuate. If the mold clamping force becomes too small, the mold unit 10 opens due to the filling pressure of the molding material, and burrs or the like may occur. If the mold clamping force becomes too large, a gas releasing failure or the like may occur.

Therefore, the correcting device 800 receives the timing signal for defining the operation timing of the mold clamping unit 100 and a target value of the mold clamping force from the molding machine controller 700 of the injection molding machine 2. For example, the target value of the mold clamping force is input by manipulating the manipulation screen.

The detection value acquisition unit 813 acquires the detection value of the mold clamping force detected at the detection timing set by the timing setting unit 812. Since the mold clamping force cannot be detected at the timing at which the mold opening step is performed or at the timing at which the mold closing step is performed, the mold clamping force is detected at the timing at which the mold clamping step is performed. For example, the mold clamping force is detected by the tie bar strain detector 141.

The correction value calculation unit 815 calculates a correction value of the set position of the toggle support 130 based on the comparison between the detection value of the mold clamping force acquired by the detection value acquisition unit 813 and the target value in order to change the detection value of the mold clamping force after the comparison. The correction value is calculated such that a deviation between the detection value of the mold clamping force and the target value after the comparison is reduced (preferably becomes zero). If the effective length TL of the tie bar 140 is shortened and the position of the toggle support 130 is displaced forward, the mold clamping force increases. If the effective length TL of the tie bar 140 is lengthened and the position of the toggle support 130 is displaced rearward, the mold clamping force decreases.

The target value of the mold clamping force may have an allowable range. The allowable range is defined by a preset threshold. The threshold that defines the allowable range may be either an upper limit value or a lower limit value, or both. Until the detection value of the mold clamping force falls within the allowable range, the calculation of the correction value by the correction value calculation unit 815 and the acquisition of the mold clamping force by the detection value acquisition unit 813 may be repeated. PI calculation or the like is used to calculate the correction value of the set position of the toggle support 130.

The correction value transmission unit 816 transmits the correction value of the set position of the toggle support 130 calculated by the correction value calculation unit 815 to the molding machine controller 700 of the injection molding machine 2. The molding machine controller 700 controls the position of the toggle support 130 by controlling the electrical device 30 (for example, at least one of the tie bar temperature controller 142 and the mold space adjustment motor 183) by using the correction value calculated by the correction value calculation unit 815. Accordingly, a predetermined mold clamping force is obtained. The position control of the toggle support 130 may be performed by the correcting device 800.

The determination unit 817 determines whether the correction value of the set position of the toggle support 130 calculated by the correction value calculation unit 815 is within the allowable range. This determination is used for determining the presence or absence of an abnormality regarding the injection molding machine 2 or the like. For example, it is determined that there is no abnormality in a case where the correction value is within the allowable range, and it is determined that there is an abnormality in a case where the correction value is outside the allowable range. For example, the allowable range is set according to an assumed temperature change width of the air temperature and a linear expansion coefficient of the tie bar 140. The allowable range is defined by a preset threshold. The threshold that defines the allowable range may be either an upper limit value or a lower limit value, or both. The determination of the presence or absence of an abnormality regarding the injection molding machine 2 may be based on a determination result of whether or not the correction value is within the allowable range and another determination result.

The determination result transmission unit 818 transmits the determination result of the determination unit 817 to the molding machine controller 700 of the injection molding machine 2. The molding machine controller 700 performs a notification control of the determination result of the determination unit 817. The notification control of the determination result may be performed by the correcting device 800.

The correcting device 800 may correct a mold clamping position of the crosshead 151 instead of correcting the position of the toggle support 130. In this case, the detection value acquisition unit 813 acquires the detection value of the mold clamping force detected at the detection timing set by the timing setting unit 812. Then, the correction value calculation unit 815 calculates a correction value of the mold clamping position of the crosshead 151 based on the comparison between the detection value of the mold clamping force acquired by the detection value acquisition unit 813 and the target value in order to change the detection value of the mold clamping force after the comparison. The correction value is calculated such that a deviation between the detection value of the mold clamping force and the target value after the comparison is reduced (preferably becomes zero) . If the mold clamping position of the crosshead 151 is displaced forward, the mold clamping force increases. If the mold clamping position of the crosshead 151 is displaced rearward, the mold clamping force decreases.

### (Correction of Set Position of Crosshead)

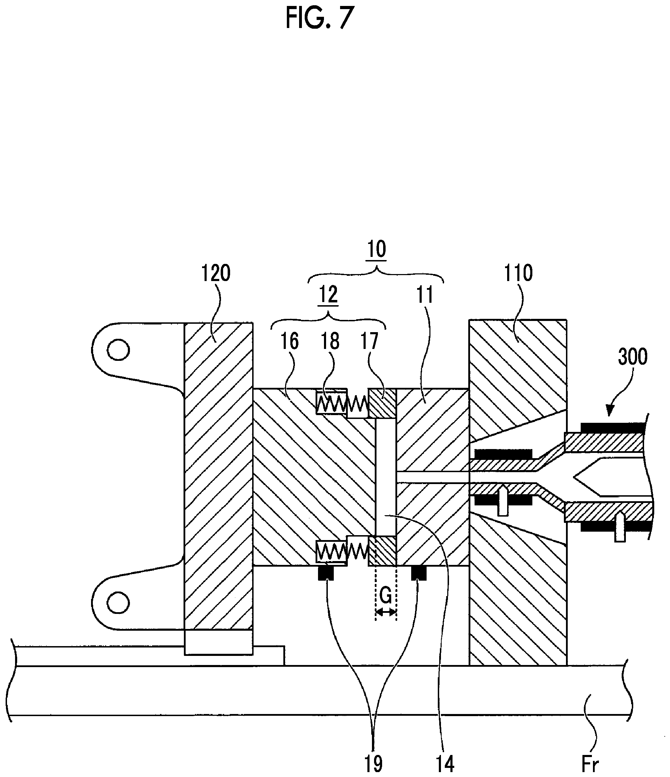

Fig. 7 is a view showing a state at the time of mold clamping of a mold unit according to a modification example. The mold unit 10 includes the stationary mold 11 and the movable mold 12. The movable mold 12 has a mold body portion 16, a frame-shaped portion 17, and a spring portion 18. The frame-shaped portion 17 surrounds a protruding portion of the mold body portion 16 and is connected to the mold body portion 16 via the spring portion 18.

In the mold closing step, the mold clamping motor 160 shown in Fig. 1 and the like is driven to move the crosshead 151 forward to the mold closing completion position at a set speed. Accordingly, the movable platen 120 moves forward. Accordingly, the frame-shaped portion 17 of the movable mold 12 is pressed against the stationary mold 11, the spring portion 18 of the movable mold 12 contracts, and the cavity space 14 is formed between the mold body portion 16 of the movable mold 12 and the stationary mold 11. For example, a position or speed of the crosshead 151 is detected using a mold clamping motor encoder 161 or the like. The mold clamping motor encoder 161 detects the rotation of the mold clamping motor 160 and sends a signal indicating the detection result to the molding machine controller 700.

In the filling step and the pressure holding step, the position of the crosshead 151 is controlled. For example, the position of the crosshead 151 is changed according to an elapsed time from start of the filling step. If the crosshead 151 is moved forward and the movable platen 120 is moved forward, the mold body portion 16 of the movable mold 12 moves forward and the cavity space 14 becomes smaller. Accordingly, the molding material filling the cavity space 14 is compressed.

The user of the injection molding machine 2 inputs a value representing a target position of the movable platen 120 in the filling step and the pressure holding step by manipulating the manipulation unit 750 while viewing the manipulation screen. For example, the target position of the movable platen 120 is represented by a gap G between the mold body portion 16 of the movable mold 12 and the stationary mold 11. For example, a target value of the gap G is changed according to the elapsed time from the start of the filling step, similarly to the value indicating the set position of the crosshead 151.

Meanwhile, the molding machine controller 700 of the injection molding machine 2 controls the position of the crosshead 151 in the filling step and the pressure holding step as described above. When the position of the crosshead 151 is the set position, the gap G may deviate from the target value. For example, the causes include an error included in a formula representing a positional relationship between the crosshead 151 and the movable platen 120, and setting of the position of the crosshead 151 is set based on experience or intuition instead of the formula.

Therefore, the detection value acquisition unit 813 acquires the gap G detected at the detection timing set by the timing setting unit 812. For example, the gap G is detected by a gap detector 19 at a timing at which the position of the crosshead 151 reaches the set position. A distance sensor or the like is used as the gap detector 19.

The correction value calculation unit 815 calculates a correction value of the set position of the crosshead 151 based on the comparison between the detection value of the gap G acquired by the detection value acquisition unit 813 and the target value in order to change the detection value of the gap G after the comparison. The correction value is calculated such that a deviation between the detection value of the gap G and the target value after the comparison is reduced (preferably becomes zero) . If the position of the crosshead 151 is displaced forward, the gap G decreases. If the position of the crosshead 151 is displaced rearward, the gap G increases.

The target value of the gap G may have an allowable range. The allowable range is defined by a preset threshold. The threshold that defines the allowable range may be either an upper limit value or a lower limit value, or both. Until the detection value of the gap G falls within the allowable range, the calculation of the correction value by the correction value calculation unit 815 and the acquisition of the gap G by the detection value acquisition unit 813 may be repeated. PI calculation or the like is used to calculate the correction value of the set position of the crosshead 151.

The correction value transmission unit 816 transmits the correction value of the set position of the crosshead 151 calculated by the correction value calculation unit 815 to the molding machine controller 700 of the injection molding machine 2. The molding machine controller 700 controls the position of the crosshead 151 by controlling the electrical device 30 (for example, the mold clamping motor 160) by using the correction value calculated by the correction value calculation unit 815. Accordingly, a size of the cavity space 14 can be accurately controlled in the filling step and the pressure holding step. The position control of the crosshead 151 may be performed by the correcting device 800.

The determination unit 817 determines whether the correction value of the set position of the crosshead 151 calculated by the correction value calculation unit 815 is within the allowable range. This determination is used for determining the presence or absence of an abnormality regarding the injection molding machine 2 or the like. For example, it is determined that there is no abnormality in a case where the correction value is within the allowable range, and it is determined that there is an abnormality in a case where the correction value is outside the allowable range. For example, the allowable range is set according to a degree of error in a formula representing the positional relationship between the crosshead 151 and the movable platen 120. The allowable range is defined by a preset threshold. The threshold that defines the allowable range may be either an upper limit value or a lower limit value, or both. The determination of the presence or absence of an abnormality regarding the injection molding machine 2 may be based on a determination result of whether or not the correction value is within the allowable range and another determination result.

The determination result transmission unit 818 transmits the determination result of the determination unit 817 to the molding machine controller 700 of the injection molding machine 2. The molding machine controller 700 performs a notification control of the determination result of the determination unit 817. The notification control of the determination result may be performed by the correcting device 800.

In the present embodiment, the movable mold 12 has the mold body portion, the frame-shaped portion, and the spring portion. However, the stationary mold 11 may have the mold body portion, the frame-shaped portion, and the spring portion. In addition, an oil hydraulic cylinder may be used instead of the spring portion as a member disposed between the mold body portion and the frame-shaped portion. The mold unit 10 may be a spigot type mold unit or the like.

### (Modifications and Improvements)

Hereinbefore, embodiments and the like of the correcting device are described. The present invention is not limited to the above embodiments or the like, and various modifications and improvements may be made within the scope of the present invention described in claims.

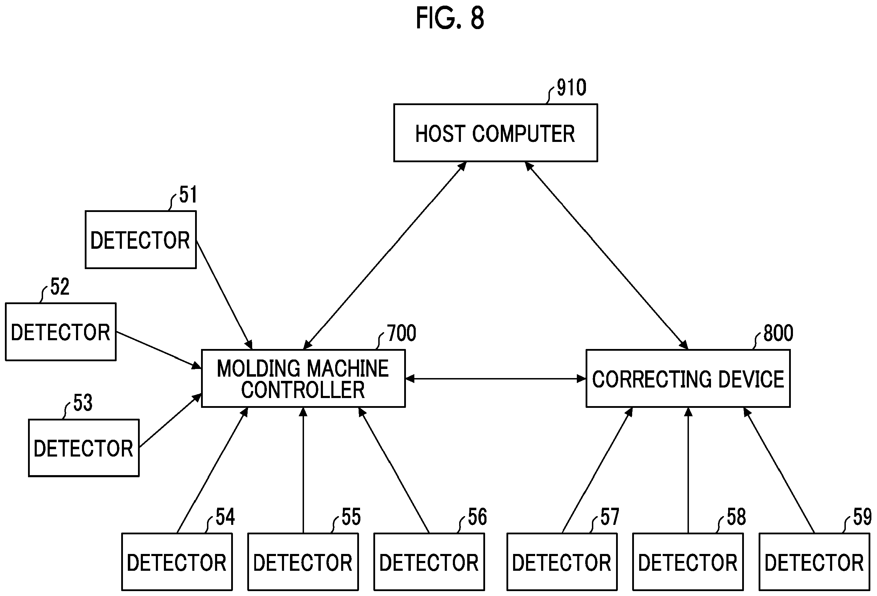

Fig. 8 is a view showing a relationship among a molding machine controller, a correcting device, and a host computer according to a modification example. A host computer 910 is constituted by a computer, similarly to the molding machine controller 700 and the correcting device 800. The host computer 910 is connected to both the molding machine controller 700 and the correcting device 800 via a network such as a Local Area Network (LAN) or an Internet line, receives different data from both, and stores the received data. Therefore, the data stored only in the molding machine controller 700 of the molding machine controller 700 and the correcting device 800 and the data stored only in the correcting device 800 of the molding machine controller 700 and the correcting device 800 are centrally managed by the host computer 910.

One molding machine controller 700 and one correcting device 800 may be provided for one injection molding machine 2. One injection molding machine 2 is provided with a plurality of (for example, nine) detectors 51 to 59. These detectors 51 to 59 are divided into a group that transmits detection values to the molding machine controller 700 and a group that transmits detection values to the correcting device 800.

Each of the detectors 51 to 56 belonging to one group transmits the detection value to the molding machine controller 700. The molding machine controller 700 stores the detection values of the detectors 51 to 56, and transmits the stored detection values to the host computer 910.

Each of the detectors 57 to 59 belonging to the remaining one group transmits the detection value to the correcting device 800. The correcting device 800 stores the detection values of the detectors 57 to 59 and transmits the stored detection values to the host computer 910.

According to this modification example, in a case where a new detector is attached to the injection molding machine 2, a detection value of the new detector can be received by the correcting device 800, so that a reception load can be distributed. Therefore, a processing load of the CPU 701 of the molding machine controller 700 can be reduced.

The molding machine controller 700 may or may not transmit the detection values of the detectors 51 to 56 to the correcting device 800. Data transmission from the molding machine controller 700 to the correcting device 800 may be performed during a time period when the processing load of the CPU 701 of the molding machine controller 700 is low.

Similarly, the correcting device 800 may or may not transmit the detection values of the detectors 57 to 59 to the molding machine controller 700. Data transmission from the correcting device 800 to the molding machine controller 700 may be performed during a time period when the processing load of the CPU 701 of the molding machine controller 700 is low.

Examples of data transmitted to the host computer 910 by the correcting device 800 include the correction values of the set values of the molding conditions of the injection molding machine 2 in addition to the detection values of the detectors 57 to 59. At least one of the detectors 57 to 59 may be the second detector 22 that detects the detection value at the detection timing set by the timing setting unit 812.

The host computer 910 may be connected to a plurality of molding machine controllers 700. The molding machine controller 700 is provided for each of injection molding machines 2. Data of a plurality of injection molding machines 2 can be centrally managed by a single host computer 910.

Similarly, the host computer 910 may be connected to a plurality of correcting devices 800. The correcting device 800 is provided for each of the injection molding machines 2. Data of the plurality of correcting devices 800 can be centrally managed by one upper computer 910.

In addition, although the correcting device 800 of this modification example is provided for each of the injection molding machines 2, the present invention is not limited to this . For example, one correcting device 800 may be provided for the plurality of injection molding machines 2. One correcting device 800 may calculate correction values of set values of molding conditions of each of the plurality of injection molding machines 2.

### Reference Signs List

- 2: injection molding machine
- 10: mold unit
- 21: first detector
- 22: second detector
- 30: electrical device
- 100: mold clamping unit
- 300: injection unit
- 700: molding machine controller
- 711: timing signal transmission unit
- 712: target value transmission unit
- 713: correction value reception unit
- 714: electrical device control unit
- 715: determination result reception unit
- 716: notification control unit
- 800: correcting device
- 811: timing signal reception unit
- 812: timing setting unit
- 813: detection value acquisition unit
- 814: target value reception unit
- 815: correction value calculation unit
- 816: correction value transmission unit
- 817: determination unit
- 818: determination result transmission unit

## Claims

1. A correcting device comprising:
a timing signal reception unit which is configure to receive a timing
signal that defines an operation timing of a drive unit of an injection molding machine controlled by a molding machine controller from the molding machine controller of the injection molding machine via a predetermined network;
a timing setting unit which is configured to set a detection timing at which a detection value is detected by a detector in the injection molding machine based on the timing signal received by the timing signal reception unit;
a detection value acquisition unit which is configured to acquire the detection value detected by the detector at the detection timing set by the timing setting unit; and
a correction value calculation unit which is configured to calculate a correction value of a set value of molding conditions of the injection molding machine based on a comparison between the detection value of the detector acquired by the detection value acquisition unit and a target value such that a deviation between the detection value and the target value becomes small.

2. The correcting device according to claim 1, further comprising:
a target value reception unit which is configured to receive the target value to be compared with the detection value of the detector from the molding machine controller.

3. The correcting device according to claim 1 or 2, further comprising:
a correction value transmission unit which is configured to transmit the correction value to the molding machine controller.

4. The correcting device according to any one of claims 1 to 3, further comprising:
an electrical device control unit which is configured to control an electrical device in the injection molding machine by using the correction value calculated by the correction value calculation unit.

5. The correcting device according to any one of claims 1 to 4, further comprising:
a determination unit which is configured to determine whether or not the correction value calculated by the correction value calculation unit is within an allowable range.

6. The correcting device according to claim 5, further comprising:
a determination result transmission unit which is configured to transmit a determination result of the determination unit to the molding machine controller.

7. The correcting device according to claim 5 or 6, further comprising:
a notification control unit which is configured to perform a notification control of the determination result of the determination unit.

8. An injection molding system comprising:
the correcting device according to any one of claims 1 to 7; and
the injection molding machine.

9. A correcting method comprising:
a step of receiving a timing signal that defines an operation timing of a drive unit of an injection molding machine controlled by a molding machine controller from the molding machine controller of the injection molding machine via a predetermined network;
a step of setting a detection timing at which a detection value is detected by a detector in the injection molding machine based on the received timing signal;
a step of acquiring the detection value detected by the detector at the set detection timing;
a step of calculating a correction value of a set value of molding conditions of the injection molding machine based on a comparison between the acquired detection value of the detector and a target value such that a deviation between the acquired detection value and the target value becomes small; and
a step of correcting the set value of molding conditions of the injection molding machine by using the correction value.

## Patentansprüche

1. Korrekturvorrichtung, umfassend:
eine Zeitsignal-Empfangseinheit, die dafür konfiguriert ist, ein Zeitsignal, das eine Betriebszeit einer Antriebseinheit einer Spritzgießmaschine, die durch eine Formmaschinensteuerung von der Formmaschinensteuerung der Spritzgießmaschine gesteuert wird, definiert via ein vorbestimmtes Netzwerk, zu empfangen,
eine Zeiteinstellungseinheit, die dafür konfiguriert ist, eine Detektionszeit, zu der ein Detektionswert durch einen Detektor in der Spritzgießmaschine auf Grundlage des durch die Zeitsignal-Empfangseinheit empfangenen Zeitsignals detektiert wird, einzustellen,
eine Detektionswert-Erfassungseinheit, die dafür konfiguriert ist, den durch den Detektor zu der durch die Zeiteinstellungseinheit eingestellten Detektionszeit detektierten Detektionswert zu erfassen, und
eine Korrekturwert-Berechnungseinheit, die dafür konfiguriert ist, einen Korrekturwert eines Sollwertes von Formbedingungen der Spritzgießmaschine auf Grundlage eines Vergleichs zwischen dem durch die Detektionswert-Erfassungseinheit erfassten Detektionswert des Detektors und einem Zielwert derart zu berechnen, dass eine Abweichung zwischen dem Detektionswert und dem Zielwert klein wird.

2. Korrekturvorrichtung nach Anspruch 1, ferner umfassend:
eine Zielwert-Empfangseinheit, die dafür konfiguriert ist, den Zielwert, der mit dem Detektionswert des Detektors verglichen werden soll, von der Formmaschinensteuerung zu empfangen.

3. Korrekturvorrichtung nach Anspruch 1 oder 2, ferner umfassend:
eine Korrekturwert-Übermittlungseinheit, die dafür konfiguriert ist, den Korrekturwert an die Formmaschinensteuerung zu übermitteln.

4. Korrekturvorrichtung nach einem der Ansprüche 1 bis 3, ferner umfassend:
eine elektrische Vorrichtungs-Steuereinheit, die dafür konfiguriert ist, eine elektrische Vorrichtung in der Spritzgießmaschine durch Verwenden des Korrekturwertes, der durch die Korrekturwert-Berechnungseinheit berechnet wird, zu steuern.

5. Korrekturvorrichtung nach einem der Ansprüche 1 bis 4, ferner umfassend:
eine Bestimmungseinheit, die dafür konfiguriert ist, zu bestimmen, ob der durch die Korrekturwert-Berechnungseinheit berechnete Korrekturwert innerhalb eines zulässigen Bereichs liegt oder nicht.

6. Korrekturvorrichtung nach Anspruch 5, ferner umfassend:
eine Bestimmungsergebnis-Übermittlungseinheit, die dafür konfiguriert ist, ein Bestimmungsergebnis der Bestimmungseinheit an die Formmaschinensteuerung zu übermitteln.

7. Korrekturvorrichtung nach Anspruch 5 oder 6, ferner umfassend:
eine Benachrichtigungssteuereinheit, die dafür konfiguriert ist, eine Benachrichtigungssteuerung des Bestimmungsergebnisses der Bestimmungseinheit durchzuführen.

8. Spritzgießsystem, umfassend:
die Korrekturvorrichtung nach einem der Ansprüche 1 bis 7 und
die Spritzgießmaschine.

9. Korrekturverfahren, umfassend:
einen Schritt des Empfangens eines Zeitsignals, das eine Betriebszeit einer Antriebseinheit einer Spritzgießmaschine, die durch eine Formmaschinensteuerung von der Formmaschinensteuerung der Spritzgießmaschine via ein vorbestimmtes Netzwerk gesteuert wird, definiert,
einen Schritt des Einstellens einer Detektionszeit, zu der ein Detektionswert durch einen Detektor in der Spritzgießmaschine auf Grundlage des empfangenen Zeitsignals detektiert wird,
einen Schritt des Erfassens des Detektionswertes, der zu der Detektionszeit durch den Detektor detektiert wird, und
einen Schritt des Berechnens eines Korrekturwertes eines Sollwertes von Formbedingungen der Spritzgießmaschine auf Grundlage eines Vergleichs zwischen dem erfassten Detektionswert des Detektors und einem Zielwert derart, dass eine Abweichung zwischen dem erfassten Detektionswert und dem Zielwert klein wird, und
einen Schritt des Korrigierens des Sollwertes von Formbedingungen der Spritzgießmaschine durch Verwendung des Korrekturwertes.

## Revendications

1. Un dispositif de correction comprenant :
une unité de réception de signal de synchronisation qui est configurée pour recevoir un signal de synchronisation qui définit un moment de fonctionnement d'une unité d'entraînement d'une machine de moulage par injection contrôlée par un contrôleur de machine de moulage de la part du contrôleur de machine de moulage de la machine de moulage par injection via un réseau prédéterminé ;
une unité de réglage de synchronisation qui est configurée pour définir un moment de détection auquel une valeur de détection est détectée par un détecteur dans la machine de moulage par injection sur la base du signal de synchronisation reçu par l'unité de réception de signal de synchronisation ;
une unité d'acquisition de valeur de détection qui est configurée pour acquérir la valeur de détection détectée par le détecteur au moment de détection défini par l'unité de réglage de synchronisation ; et
une unité de calcul de valeur de correction qui est configurée pour calculer une valeur de correction d'une valeur définie de conditions de moulage de la machine de moulage par injection sur la base d'une comparaison entre la valeur de détection du détecteur acquise par l'unité d'acquisition de valeur de détection et une valeur cible de sorte qu'un écart entre la valeur de détection et la valeur cible devienne faible.

2. Le dispositif de correction selon la revendication 1, comprenant en outre :
une unité de réception de valeur cible qui est configurée pour recevoir la valeur cible à comparer avec la valeur de détection du détecteur de la part du contrôleur de machine de moulage.

3. Le dispositif de correction selon la revendication 1 ou 2, comprenant en outre :
une unité de transmission de valeur de correction qui est configurée pour transmettre la valeur de correction au contrôleur de machine de moulage.

4. Le dispositif de correction selon l'une quelconque des revendications 1 à 3, comprenant en outre :
une unité de commande de dispositif électrique qui est configurée pour contrôler un dispositif électrique dans la machine de moulage par injection en utilisant la valeur de correction calculée par l'unité de calcul de valeur de correction.

5. Le dispositif de correction selon l'une quelconque des revendications 1 à 4, comprenant en outre :
une unité de détermination qui est configurée pour déterminer si la valeur de correction calculée par l'unité de calcul de valeur de correction se trouve ou non dans des limites autorisées.

6. Le dispositif de correction selon la revendication 5, comprenant en outre :
une unité de transmission de résultat de détermination qui est configurée pour transmettre un résultat de détermination de l'unité de détermination au contrôleur de machine de moulage.

7. Le dispositif de correction selon la revendication 5 ou 6, comprenant en outre :
une unité de contrôle de notification qui est configurée pour effectuer un contrôle de notification du résultat de détermination de l'unité de détermination.

8. Un système de moulage par injection comprenant :
le dispositif de correction selon l'une quelconque des revendications 1 à 7 ; et
la machine de moulage par injection.

9. Une méthode de correction comprenant :
une étape de réception d'un signal de synchronisation qui définit un moment de fonctionnement d'une unité d'entraînement d'une machine de moulage par injection contrôlée par un contrôleur de machine de moulage de la part du contrôleur de machine de moulage de la machine de moulage par injection via un réseau prédéterminé ;
une étape de définition d'un moment de détection auquel une valeur de détection est détectée par un détecteur dans la machine de moulage par injection sur la base du signal de synchronisation reçu ;
une étape d'acquisition de la valeur de détection détectée par le détecteur au moment de détection défini ;
une étape de calcul d'une valeur de correction d'une valeur définie de conditions de moulage de la machine de moulage par injection sur la base d'une comparaison entre la valeur de détection acquise du détecteur et une valeur cible de sorte qu'un écart entre la valeur de détection acquise et la valeur cible devienne faible ;
et
une étape de correction de la valeur définie de conditions de moulage de la machine de moulage par injection en utilisant la valeur de correction.
